# EUROPÄISCHE PATENTSCHRIFT

(11) **EP 0 465 964 B1**
(45) Veröffentlichungstag und Bekanntmachung des Hinweises auf die Patenterteilung: **24.05.1995**
(21) Anmeldenummer: 91110821.5
(22) Anmeldetag: 29.06.1991
(51) Int. Cl.: C08F 6/16

(54) **Verfahren zur Entfernung von flüchtigen Bestandteilen aus Emulsionspolymerisaten**
Process for separation of volatile components from polymers prepared in emulsion
Procédé pour l'élimination d'ingrédients volatils de polymérisates d'émulsion

(30) Priorität: 10.07.1990 DE 4021961
(43) Veröffentlichungstag der Anmeldung: 15.01.1992
(73) Patentinhaber: BASF Aktiengesellschaft, 67063 Ludwigshafen (DE)
(72) Erfinder: Stahnecker, Erhard, Dr., W-6900 Heidelberg (DE); Deuschel, Walter, Dr., W-6700 Ludwigshafen 29 (DE); Frey, Günter, Dr., W-6701 Dannstadt-Schauernheim (DE); Goertz, Hans-Helmut, Dr., W-6713 Freinsheim (DE); Liedy, Werner, Dr., W-6701 Hochdorf-Assenheim (DE); Dietrich, Matthias, W-6940 Weinheim (DE)

(56) Entgegenhaltungen:
- EP-A- 0 003 120
- EP-A- 0 299 344
- DE-B- 2 618 597

## Beschreibung

Die Erfindung betrifft ein Verfahren zur Entfernung von flüchtigen Bestandteilen aus Emulsionspolymerisaten.

Emulsionspolymerisate finden als solche oder in Mischung mit Thermoplasten wie Polyestern, Polyamiden oder Polyvinylchlorid (PVC) vielfältige Verwendung auf dem Werkstoffsektor. Besondere Bedeutung haben sie z.B. bei der Schlagzähmodifizierung von Thermoplasten erlangt. Für die Verträglichkeit mit PVC haben sich z.B. Pfropfpolymerisate mit einem schalenförmigen Aufbau als vorteilhaft erwiesen, bei denen die äußeren Pfropfhüllen polare Monomere, wie z.B. Methacrylate und Acrylnitril enthalten und welche zu einem großen Teil aus Butadien, Styrol, C₂-C₈-Alkylacrylate, Methylmethacrylat oder Gemischen dieser Monomere bestehen. Die durch Emulsionspolymerisation hergestellten Pfropfpolymerisate enthalten noch deutliche Mengen an Restmonomeren. Der Gehalt an Restmonomeren ist unerwünscht, weil Polymere, z.B. PVC, die mit den Pfropfpolymerisaten modifiziert sind, in Fällen, wo Geschmacks- und Geruchsbeeinträchtigungen besonders vermieden werden müssen, nicht eingesetzt werden können. Besonders kritisch ist z.B. die Verwendung von Hohlkörpern aus mit Pfropfpolymerisaten modifizierten Thermoplasten für die Abfüllung von Mineralwässern, da schon geringe Mengen an Restmonomeren den Geschmack empfindlich beeinträchtigen. Es ist daher wünschenswert Pfropfpolymerisate zu erhalten, bei denen der Gehalt an Restmonomeren sehr niedrig ist oder im günstigsten Fall diese Restmonomeren nicht mehr nachweisbar sind.

Im allgemeinen werden die Emulsionspolymerisate aus den bei ihrer Herstellung erhaltenen Emulsionen als Pulver isoliert. Zur überführung in Pulver können die Emulsionspolymerisate, wie in der DE-B-17 94 162 und EP-A-50 848 beschrieben, aus den Emulsionen durch geeignete Fällmittel gefällt werden. Dabei entstehen Agglomerate, welche für die weitere Verarbeitung ungeeignet sind und daher zerteilt werden müssen. Zur Absenkung des Restmonomerengehaltes müssen diese Agglomerate einem aufwendigen Waschprozeß unterzogen werden. Eine für viele Emulsionspolymerisate geeignete Methode zur Gewinnung von rieselfähigen Pulvern, welche sich bei der weiteren Verarbeitung gut handhaben lassen, ist die Sprühtrocknung der noch in Emulsion befindlichen Emulsionspolymerisate. Bei der Sprühtrocknung werden Pulver mit einem mittleren Teilchendurchmesser d₅₀ (Volumenmittel) von ca. 100 bis 300 »m erhalten, deren Restmonomerengehalt für Anwendungen, bei denen es auf Geschmacksneutralität ankommt, jedoch noch zu hoch ist.

Bisher wurde versucht, durch Extraktion mit überkritischen Gasen den Restmonomerengehalt von Polymeren zu senken. Nachteile dieser Verfahren bestehen in den notwendigen hohen Drucken, der damit verbundenen technisch aufwendigen Verfahrensdurchführung und darin, daß hohe Drucke zu einem Zusammenbacken der Polymerteilchen führen können.

Aus der DE-A1-33 23 940 ist ein Verfahren zur Reinigung von Polymeren bekannt, das durch einen Extraktionsschritt mit einem überkritischen Gas gekennzeichnet ist. Die im Polymer verbleibende Restmonomerenmenge liegt noch in einer Größenordnung von ca. 50 ppm.

In der US-A-4 703 105 wird die Extraktion von styrolhaltigen Polymerisaten wie Copolymerisaten aus Styrol und Acrylnitril, ggf. gepfropft auf Butadienkautschuk mit überkritischem CO₂ beschrieben.

Der Restmonomergehalt von Styrol liegt nach der Extraktion noch deutlich über 500 ppm.

Nach der EP-A-142 894 wird bei der Extraktion von EPDM-Kautschuk mit überkritischem CO₂ ein Restmonomerengehalt von <0,01 % erreicht.

Der Erfindung lag daher die Aufgabe zugrunde, den Restmonomerengehalt von pulverförmigen Emulsionspolymerisaten auf einfachere Weise als bisher zu senken, ohne daß hierbei die Rieselfähigkeit des Pulvers beeinträchtigt wird und ohne daß es zu Agglomerationen der Teilchen kommt.

Demgemäß wurde das Verfahren zur Entfernung von flüchtigen Bestandteilen aus Emulsionspolymerisaten, das dadurch gekennzeichnet ist, daß man die Emulsionspolymerisate sprühtrocknet und anschließend die erhaltenen pulverförmigen Emulsionspolymerisate, die weniger als 0,7 Gew.-% Wasser enthalten, bei Normaldruck oder vermindertem Druck und Temperaturen von 30 bis 200°C unter ständiger Durchmischung mit einem Inertgas behandelt, gefunden.

Bei den eingesetzten Emulsionspolymerisaten sind besonders Pfropfpolymerisate von Bedeutung. Die schalenförmig aufgebauten Pfropfpolymerisate können einen Kern als Pfropfgrundlage und eine oder mehrere auf den Kern aufgebrachte Pfropfhüllen enthalten.

Die Pfropfpolymerisate können aus einem weichen, kautschukartigen Kern mit einer Glastemperatur unter 0°C und aus einer oder mehreren harten Pfropfhüllen aus Monomeren, deren Homopolymere Glastemperaturen über 0°C aufweisen, aufgebaut sein. In Abwandlung dieses Aufbaus kann der Kern aus harten Monomeren bestehen und auf diesem Kern eine weiche, kautschukartige Pfropfhülle aufpolymerisiert sein, an die sich wiederum weitere harte Pfropfhüllen anschließen.

Es können auch Pfropfpolymerisate eingesetzt werden, die weder einen weichen Kern noch eine weiche Hülle aufweisen und vorwiegend aus harten Monomeren bestehen, z.B. aus Styrol, α-Methylstyrol, Alkylmethacrylate, insbesondere Methylmethacrylat und Acrlynitril.

Es können jedoch ebenfalls Emulsionspolymerisate eingesetzt werden, die keinen schalenförmigen Aufbau aufweisen.

Bevorzugt besteht das eingesetzte Emulsionspolymerisat zu mindestens 90 Gew.-% aus einem Gemisch von mindestens zwei Monomeren ausgewählt aus Styrol, linearen oder verzweigten C₁-C₁₂-Alkyl-(meth-)acrylaten, Butadien, Acrylnitril und α-Methylstyrol.

Die Herstellung der Emulsionspolymerisate kann in an sich bekannter Weise erfolgen. Als Emulgatoren können bei der Emulsionspolymerisation z.B. Alkalisalze von längerkettigen Fettsäuren, Alkylsulfate, Alkylsulfonate, alkylierte Arylsulfonate oder alkylierte Biphenylethersulfonate Salze der Abietinsäure oder deren Derivate sowie Sulfobernsteinsäureester verwendet werden.

Als Initiatoren können z.B. übliche wasserlösliche thermisch zerfallende Initiatoren wie Na₂S₂O₈, (NH₄)₂S₂O₈ Kaliumpersulfat oder Redoxinitiatoren wie z.B. Na₂S₂O₈/Na₂S₂O₅, t-Butylhydroperoxid/Natriumformaldehydsulfoxylat eingesetzt werden.

Die Emulsionspolymerisation kann bei Temperaturen zwischen 30 und 95°C durchgeführt werden.

Bei Pfropfpolymerisaten werden zunächst die Monomeren des Kerns polymerisiert. Dann erfolgt die Zugabe der Pfropfmonomeren zur wäßrigen Emulsion. Die Monomeren der einzelnen Pfropfhüllen werden zudosiert und zu mehr als 70 Gew.-%, bevorzugt zu mehr als 95 Gew.-%, auspolymerisiert, bevor mit der Zugabe der Monomeren einer weiteren Pfropfhülle begonnen wird.

Der Teilchendurchmesser der Emulsionspolymerisate kann bei der Durchführung der Polymerisation eingestellt werden, wie es z.B. in der DE-C 22 130 989 beschrieben ist. Die Teilchengröße kann durch die Rührergeschwindigkeit eingestellt werden. Ferner kann man ein Emulgiermittel und/oder einen Katalysator zur Steuerung der Größe der Teilchen einsetzen. Bei der Emulsionspolymerisation werden bevorzugt Polymerisate mit einem mittleren Teilchendurchmesser d₅₀ (Volumenmittel) zwischen ca. 500 und 3000 Å hergestellt.

Der Feststoffgehalt der Emulsionen beträgt bevorzugt 30 bis 60 Gew.-%.

Die Emulsionspolymerisate werden bis zu einem Restwassergehalt <0,7 Gew.-% bevorzugt <0,5 Gew., sprühgetrocknet.

Größere Restwassergehalte als 0,7 Gew.-% führen bei der anschließenden Behandlung mit Inertgas zu einem Verkleben der Pulver. Bei der Sprühtrocknung kann die Eintrittstemperatur des Trockengases in den Sprühturm z.B. zwischen 100 und 200°C und die Temperatur des getrockneten Pulvers am Ausgang des Sprühturms zwischen 40 und 100°C liegen.

Die Sprühtrocknung kann in dem Fachmann bekannter Weise durchgeführt werden. Ausführliche Beschreibungen finden sich z.B. im "Spray drying handbook" (K. Mosters, New York 1985). Bei der Sprühtrocknung der Emulsionspolymerisate werden rieselfähige Pulver erhalten. Der mittlere Teilchendurchmesser, der bei der Sprühtrocknung erhaltenen Pulver, beträgt im allgemeinen 50 bis 500 »m, insbesondere 100 bis 300 »m.

Zur Entfernung der flüchtigen Bestandteile werden die erhaltenen pulverförmigen Emulsionspolymerisate bei vermindertem Druck oder Normaldruck und Temperaturen zwischen 30 und 200°C unter ständiger Durchmischung mit einem Inertgas, d.h. einem gegenüber den Emulsionspolymerisaten unter den gegebenen Bedingungen nicht reaktiven Gas, behandelt.

Als Inertgase kommen z.B. Luft, Stickstoff und Kohlendioxid in Frage. Bevorzugt ist Stickstoff.

Bevorzugt wird das Emulsionspolymerisat von dem Inertgas kontinuierlich durchströmt, wobei schon ein geringer Inertgasstrom von 0,001 Nm³ pro Stunde und kg Polymerisat bis etwa 0,5 Nm³ pro Stunde und kg Polymerisat ausreicht, um eine deutliche Abnahme der flüchtigen Bestandteile zu erzielen (Nm³: Normkubikmeter bei 1 bar und 298 K).

Dazu wird das Emulsionspolymerisat in einen geeigneten Behälter gegeben, der mit einer Ein- und Auslaßöffnung für den Inertgasstrom versehen ist. Die Behandlung des Emulsionspolymerisats mit einem Inertgas wird vorzugsweise bei einem Druck unter 800 mbar, insbesondere zwischen 800 und 50 mbar, besonders bevorzugt zwischen 200 mbar und 50 mbar durchgeführt.

Die Temperatur des Inertgases beträgt bevorzugt 80 bis 180°C. Bevorzugt liegt die Temperatur 5 bis 100°C, besonders bevorzugt 15 bis 50°C oberhalb der Erweichungstemperatur (Vicat A nach DIN 53 460) des Emulsionspolymerisats. Die Temperaturen sollten jedoch 200°C nicht überschreiten. Das Emulsionspolymerisat wird während der Behandlung mit dem Inertgas ständig durchmischt. Die Durchmischung kann z.B. durch eine geeignete Rührvorrichtung bewirkt werden. Bevorzugt erfolgt die Durchmischung in einem Wirbelbett, wobei Inertgas in einer Menge durch das Emulsionspolymerisat geleitet wird, die ausreicht, das Emulsionspolymerisat in einem Wirbelbett zu halten. Erfahrungsgemäß sind hierzu etwa 1 bis 10 Nm³/Stunde und kg Polymerisat ausreichend. Bei größeren Gasmengen kann es zum Austrag von Pulverteilchen kommen.

Das erfindungsgemäße Verfahren kann sowohl kontinuierlich als auch diskontinuierlich durchgeführt werden. Bei der diskontinuierlichen Verfahrensweise kann das bei der Sprühtrocknung erhaltene pulverförmige Emulsionspolymerisat zunächst zwischengelagert und zu einem späteren Zeitpunkt mit Inertgas behandelt werden. Bei der kontinuierlichen Verfahrensweise kann das pulverförmige Emulsionspolymerisat vom Boden des Sprühturms direkt zur weiteren Behandlung mit Inertgas in einen geeigneten Kessel geleitet werden.

Bevorzugt erfolgt bei der kontinuierlichen Verfahrensweise die Durchmischung des Pulvers in einem Wirbelbett, wobei entsprechend der zugeführten Pulvermenge ein Austrag von Emulsionspolymerisatpulver durch eine oberhalb des Wirbelbetts angebrachte Öffnungsvorrichtung stattfindet.

Bei der kontinuierlichen Verfahrensweise kann die Behandlung mit Inertgas auch in mehreren, in Form einer Kaskade hintereinander angebrachten Kesseln, erfolgen.

Der Gehalt an flüchtigen Bestandteilen im Emulsionspolymerisat nimmt während der Behandlung mit Inertgas deutlich ab. Schon nach kurzer Zeit werden Restmonomergehalte unter 1 ppm festgestellt. Die eingesetzten Pulver bleiben gut rieselfähig. Die Korngrößenverteilung wird durch die beschriebene Behandlung mit Inertgas kaum geändert.

Die nach dem Verfahren erhältlichen, weitgehend von flüchtigen Bestandteilen befreiten Emulsionspolymerisate können als Modifizierungsmittel für Thermoplaste, insbesondere für PVC, eingesetzt werden.

Die folgenden Beispiele sollen die Erfindung erläutern. Die flüchtigen Bestandteile werden in den Beispielen zusammenfassend als Restmonomere bezeichnet. Teile sind Gewichtsteile. Die Bestimmung des Restwassergehalts erfolgte durch Titration nach Karl Fischer. Die Bestimmung der Erweichungstemperatur erfolgte nach DIN 53 460 (Vicat A).

### Beispiel 1

Es wurde ein in üblicher Weise durch Emulsionspolymeristion hergestelltes sprühgetrocknetes Pfropfpolymerisat mit einem Restwassergehalt von 0,31 Gew.-% eingesetzt, das aus 67 Teilen eines Pfropfkerns und 33 Teilen einer Pfropfhülle aufgebaut war, wobei der Pfropfkern seinerseits aus 75 Teilen Butadien, 24 Teilen Styrol und 1 Teil Butandioldiacrylat, die Pfropfhülle aus 59 Teilen Methylmethacrylat, 40 Teilen Styrol und 1 Teil Butandioldiacrylat bestand. Die Erweichungstemperatur betrug 90°C. Das pulverförmige Polymerisat hatte folgende Korngrößenverteilung:

| | |
|---|---|
| 40 - 90 »m: | 14 Gew.-% |
| 90 - 160 »m: | 26 Gew.-% |
| 160 - 250 »m: | 54 Gew.-% |
| >250 »m: | 6 Gew.-%. |

An flüchtigen Bestandteilen wurden durch Thermolysegaschromatographie ermittelt:

| | |
|---|---|
| Styrol: | 16 ppm |
| Ethylbenzol: | 17 ppm |
| Vinylcyclohexen: | 27 ppm |
| Phenylcyclohexen: | 33 ppm. |

2600 g des Polymerisates wurden in einen ca. 6 l fassenden beheizbaren zylindrischen Glasbehälter gefüllt, unter Rühren mit einem Wendelrührer auf 100°C aufgeheizt, wobei die Wärme einerseits über die Behälterwand, andererseits mit Hilfe eines Stickstoffstromes in das Pulver eingetragen wurde. Durch besagten Stickstoffstrom (ca. 5 Nm³/h), der über einen Tuchboden in den Behälter eingeführt wurde, wurde das Pulver in einem Wirbelbett ständig in Bewegung gehalten. Nach 0,5, 1,5 und 2 h wurden Proben entnommen und die Restmonomerengehalte in ppm bestimmt:

| | 0,5 h | 1,5 h | 2 h |
|---|---|---|---|
| Styrol: | <1 | <1 | <1 |
| Ethylbenzol: | <1 | <1 | <1 |
| Vinylcyclohexen: | <1 | <1 | <1 |
| Phenylcyclohexen: | 27 | 23 | 15 |

Nach zweistündiger Behandlung hatte das Pulver folgende Korngrößenverteilung:

| | |
|---|---|
| 90 - 160 »m: | 57 Gew.-% |
| 160 - 250 »m: | 35 Gew.-% |
| >250 »m: | 8 Gew.-% |

### Beispiel 2

Es wurde ein in üblicher Weise durch Emulsionspolymerisation hergestelltes sprühgetrocknetes Pfropfpolymerisat mit einem Restwassergehalt von 0,25 Gew.-% eingesetzt, das aus 73 Teilen eines Pfropfkerns und 27 Teilen einer Pfropfhülle aufgebaut war, wobei der Pfropfkern aus 10 Teilen eines mit 2 % Butandioldiacrylat vernetzten Polystyrols und 63 Teilen eines Kautschuks, aufgebaut aus 85 Teilen Butadien, 14 Teilen Styrol und 1 Teil Butandioldiacrylat und die Pfropfhülle aus 2 Stufen, einer ersten Stufe aus mit 1 % Butandiol vernetztem Polystyrol und einer zweiten Stufe aus mit 1 % Butandioldiacrylat vernetztem Polymethylmethacrylat bestand. Das Produkt hatte eine Erweichungstemperatur von 95°C.

An flüchtigen Bestandteilen wurden durch Thermolysegaschromatographie ermittelt:

| | |
|---|---|
| Styrol: | 5 ppm |
| Ethylbenzol: | 25 ppm |
| Vinylcyclohexen: | 100 ppm |
| Phenylcyclohexen: | 38 ppm. |

Die Durchführung entsprach Beispiel 1, die Temperatur betrug 105°C.

| Restmonomerengehalt nach (ppm) | 30 min | 105 min | 135 min |
|---|---|---|---|
| Styrol: | 1 | <1 | <1 |
| Ethylbenzol: | <1 | <1 | <1 |
| Vinylcyclohexen: | <1 | <1 | <1 |
| Phenylcyclohexen: | 19 | 10 | 8. |

### Beispiel 3

Es wurde ein in üblicher Weise durch Emulsionspolymerisation hergestelltes sprühgetrocknetes Pfropfpolymerisat mit einem Restwassergehalt von 0,12 Gew.-% eingesetzt, das aus 60 Teilen eines Pfropfkerns und 40 Teilen einer Pfropfhülle aufbaut war, wobei der Pfropfkern aus 9 Teilen eines mit 5 % Butandioldiacrylat vernetzten Polystyrols und 51 Teilen eines Kautschuks, aufgebaut aus 81 Teilen Butadien, 18 Teilen Styrol und 1 Teil Butandioldiacrylat und die Pfropfhülle aus 44 Teilen Styrol, 23 Teilen n-Butylacrylat, 15 Teilen Acrylnitril, 17 Teilen Methylmethacrylat und 1 Teil Butandioldiacrylat bestand. Das Produkt hatte eine Erweichungstemperatur von 78°C.

An flüchtigen Bestandteilen wurden durch Thermolysegaschromatographie ermittelt:

| | |
|---|---|
| Styrol: | 13 ppm |
| Ethylbenzol: | 37 ppm |
| Vinylcyclohexen: | 35 ppm |
| Phenylcyclohexen: | 27 ppm |

Die Durchführung entsprach Beispiel 1, die Temperatur betrug 110°C.

| Restmonomerengehalt nach (ppm) | 30 min | 105 min | 135 min |
|---|---|---|---|
| Styrol: | <1 | <1 | <1 |
| Ethylbenzol: | <1 | <1 | <1 |
| Vinylcyclohexen: | <1 | <1 | <1 |
| Phenylcyclohexen: | 18 | 9 | 4 |

### Beispiel 4

Es wurde ein in üblicher Weise durch Emulsionspolymerisation hergestelltes sprühgetrocknetes Pfropfpolymerisat mit einem Restwassergehalt von 0,1 Gew.-% eingesetzt, bestehend aus 70 eines Pfropfkerns und 30 Teilen einer Pfropfhülle, wobei der Pfropfkern aus 33 Teilen eines vernetzten Polystyrols in erster Stufe und 37 Teilen eines vernetzten Polybutylacrylats in zweiter Stufe, die Pfropfhülle aus 15 Teilen eines vernetzten Polystyrols in erster Stufe und 15 Teilen eines vernetzten Polymethylmethacrylats in zweiter Stufe bestand.

Die Durchführung entsprach Beispiel 1, der Stickstoffstrom betrug 5,3 Nm³/h und die Temperatur 105°C.

| Restmonomergehalt (ppm) | vorher | nach 5 h |
|---|---|---|
| Methylmethacrylat | 330 | 180 |
| Styrol | 3 | 1 |
| Ethylbenzol | 75 | <1 |

Der hohe Gehalt an Methylmethacrylat wird durch die Rückspaltung des Polymethylmethacrylats in Methylmethacrylat während der Bestimmung der flüchtigen Bestandteile durch Thermolysegaschromatographie verursacht.

### Korngrößenverteilung [Gew.-%]

| | vorher | nach 5 Stunden |
|---|---|---|
| > 40 »m | 99 | 100 |
| > 90 »m | 79 | 88 |
| > 125 »m | 54 | 68 |
| > 160 »m | 24 | 58 |
| > 250 »m | 4 | 6 |

### Beispiel 5

91 g des in Beispiel 3 eingesetzten Pfropfpolymerisats wurden in einem 0,30 m hohen doppelwandigen Glaszylinder gefüllt, dessen Innendurchmesser 0,06 m beträgt. Das Polymerisat wurde sowohl über die auf 160°C beheizten Apparatewände als auch durch einen Stickstoffstrom (160°C) aufgeheizt. Durch den besagten Stickstoffstrom [ca. 0,4 Nm³/h], der über eine Glasfritte in den Zylinder eingeleitet wurde, wurde das Pulver in einem Wirbelbett ständig in Bewegung gehalten.

Es wurden während des Versuches mehrere Proben genommen und mittels Thermolysegaschromatographie die Restmonomerengehalte der Pfropfpolymerisate bestimmt:

| Restmonomerengehalt (ppm) nach | 0 min | 8 min | 17 min | 24 min | 38 min |
|---|---|---|---|---|---|
| Styrol | 6 | <1 | <1 | <1 | <1 |
| Ethylbenzol | 19 | <1 | <1 | <1 | <1 |
| Vinylcyclohexen | 12 | <1 | <1 | <1 | <1 |
| Phenylcyclohexan | 30 | 10 | <1 | <1 | <1 |

### Beispiel 6

2,0 kg des in Beispiel 3 eingesetzten Pfropfpolymerisats wurden in einem 0,5 m hohen Glaszylinder gefüllt, dessen Innendurchmesser 0,14 m beträgt. Das Polymerisat wurde sowohl über die auf 180°C beheizten Apparatewände als auch einem Stickstoffstrom 180°C aufgeheizt. Durch den besagten Stickstoffstrom [ca. 5,0 Nm³/h], der über einen Lochboden in den Zylinder eingeleitet wurde, wurde das Pulver in einem Wirbelbett ständig in Bewegung gehalten.

Es wurden während des Versuches Proben genommen und mittels Thermolysegaschromatographie die Restmonomergehalte der Pfropfpolymerisate bestimmt:

| Restmonomerengehalt (ppm) nach | 0 min | 28 min |
|---|---|---|
| Styrol | 4 | <1 |
| Ethylbenzol | 12 | <1 |
| Vinylcyclohexen | 7 | <1 |
| Phenylcyclohexan | 27 | 2 |

### Beispiel 7

Es wurde ein sprühgetrocknetes Pfropfpolymerisatpulver mit einem Restwassergehalt von 0,38 Gew.-% und einer Zusammensetzung gemäß des Pfropfpolymerisats aus Beispiel 1 mit folgender Korngrößenverteilung und folgenden Restmonomergehalten eingesetzt:

| | |
|---|---|
| 40 - 90 »m: | 14 Gew.-% |
| 90 - 160 »m: | 26 Gew.-% |
| 160 - 250 »m: | 54 Gew.-% |
| >250 »m: | 6 Gew.-% |

| | |
|---|---|
| Styrol: | 17 ppm |
| Ethylbenzol: | 24 ppm |
| Vinylcyclohexen: | 32 ppm |

1000 g des Polymerisates wurden in einen ca. 4 l fassenden zylindrischen Laborschaufeltrockner gefüllt, unter langsamer Umwälzung auf 50°C aufgeheizt und bei 200 mbar mit 10 l Stickstoff pro Stunde begast. Nach 1,3,5 und 7 Stunden wurden jeweils Proben entnommen und die flüchtigen Bestandteile bestimmt (Werte in ppm):

| | 1 h | 3 h | 5 h | 7 h |
|---|---|---|---|---|
| Styrol: | 14 | 13 | 13 | 11 |
| Ethylbenzol: | 19 | 17 | 16 | 14 |
| Vinylcyclohexen: | 26 | 22 | 20 | 17 |

Nach siebenstündiger Behandlung hatte das Produkt folgende Korngrößenverteilung:

| | |
|---|---|
| 40 - 90 »m: | 12 Gew.-% |
| 90 - 160 »m: | 26 Gew.-% |
| 160 - 250 »m: | 53 Gew.-% |
| >250 »m: | 9 Gew.-% |

### Beispiel 8

Beispiel 7 wurde wiederholt, wobei die Temperatur 80°C betrug.

| Restmonomerengehalt (ppm) nach | 1 h | 3 h | 5 h | 7 h |
|---|---|---|---|---|
| Styrol | 10 | 10 | 7 | 5 |
| Ethylbenzol | 13 | 10 | 5 | 3 |
| Vinylcyclohexen | 15 | 9 | 4 | 2 |

Korngrößenverteilung nach 7 Stunden

| | |
|---|---|
| 40 - 90 »m: | 12 Gew.-% |
| 90 - 160 »m: | 34 Gew.-% |
| 160 - 250 »m: | 46 Gew.-% |
| >250 »m: | 8 Gew.-% |

### Beispiel 9

Beispiel 8 wurde wiederholt, wobei die Temperaturen 95°C betrug.

| Restmonomerengehalt (ppm) nach | 1 h | 3 h | 5 h | 7 h |
|---|---|---|---|---|
| Styrol | 11 | 5 | 2 | 1 |
| Ethylbenzol | 12 | 3 | 1 | <1 |
| Vinylcyclohexen | 14 | 2 | <1 | <1 |

Korngrößenverteilung nach 7 Stunden:

| | |
|---|---|
| 40 - 90 »m: | 7 Gew.-% |
| 90 - 160 »m: | 48 Gew.-% |
| 160 - 250 »m: | 47 Gew.-% |
| >250 »m: | 5 Gew.-% |

### Beispiel 10

In einem Rührbehälter, der mit einem Fließboden ausgestattet war, wurden 300 kg des Pfropfpolymerisats aus Beispiel 3 mit einem Restwassergehalt von 0,37 Gew.-% mit Hilfe eines Stickstoffstroms von 20 m³/h bei 200 mbar und 120°C in einem Wirbelbett gehalten und gleichzeitig mit einem kreuzbalkenrührer mit 70 U/min gerührt.

| Restmonomerengehalt (ppm) nach | 0 h | 0,5 h | 1,0 h | 1,5 h | 2,0 h |
|---|---|---|---|---|---|
| Methylmethacrylat | 31 | 4 | <1 | <1 | <1 |
| Vinylcyclohexen | 116 | 35 | 5 | 2 | 1 |
| Ethylbenzol | 76 | 30 | 6 | 1 | <1 |
| Styrol | 14 | 7 | 2 | 1 | <1 |
| Butylacrylat | 92 | 41 | 9 | 1 | <1 |
| Butylpropionat | 47 | 32 | 7 | 1 | <1 |

Korngrößenverteilung des Pfropfpolymerisats (Gew.-%):

| | vorher | nach 3,5 h |
|---|---|---|
| > 40 »m | 94,9 | 97,4 |
| >125 »m | 47,7 | 64,3 |
| >200 »m | 14,7 | 18,6 |
| >315 »m | 1,0 | 1,5 |
| >500 »m | 0 | 0,3 |

### Beispiel 11

Die Versuchsdurchführung entsprach Beispiel 10, wobei der Stickstoffstrom 30 m³/h und die Temperatur 110°C betrug. Eingesetzt wurde ein Pfropfpolymerisat der Zusammensetzung gemäß Beispiel 1 und mit einem Restwassergehalt von 0,55 Gew.-%.

| Restmonomerengehalt (ppm) nach | 0 h | 1 h | 2 h | 3 h | 4 h |
|---|---|---|---|---|---|
| Methylmethacrylat | 625 | 76 | 14 | 5 | <1 |
| Vinylcyclohexen | 361 | 77 | 11 | 5 | <1 |
| Ethylbenzol | 98 | 33 | 5 | 1 | <1 |
| Styrol | 522 | 319 | 60 | 12 | <1 |

Korngrößenverteilung des Pfropfpolymerisats (Gew.-%):

| | vorher | nach 6 h |
|---|---|---|
| > 40 »m | 89,6 | 95,3 |
| >125 »m | 44,0 | 49,6 |
| >200 »m | 14,0 | 16,7 |
| >315 »m | 2,2 | 1,3 |
| >500 »m | 0 | 0 |

### Beispiel 12

Es wurde ein in üblicher Weise durch Emulsionspolymerisation hergestelltes unvernetztes Pfropfpolymerisat eingesetzt, das aus gleichen Teilen einer ersten und einer zweiten Polymerisationsstufe bestand, wobei die erste Stufe aus Polymethylmethacrylat, die zweite aus einem Copolymeren von Methylmethacrylat und Butylacrylat im Gewichtsverhältnis 80:20 bestand. Das Polymerisat hatte eine Erweichungstemperatur von 81°C.

Der Restwassergehalt des Pfropfpolymerisats betrug nach Sprühtrocknung 0,65 Gew.-%.

Die Durchführung entsprach Beispiel 10, der Stickstoffstrom betrug 20 Nm³/h und die Temperatur betrugen 110°C.

| Restmonomerengehalt (ppm) nach | 0 h | 1,0 h | 2 h | 3 h | 4 h |
|---|---|---|---|---|---|
| Methylmethacrylat | 8 | 3 | 3 | <1 | <1 |
| Butylacrylat | 892 | 240 | 51 | 6 | <1 |
| Butylpropionat | 55 | 13 | 3 | <1 | <1 |

Korngrößenverteilung des Pfropfpolymerisats (Gew.-%):

| | vorher | nach 3,5 h |
|---|---|---|
| > 40 »m | 60,7 | 81,9 |
| >125 »m | 34,3 | 51,0 |
| >200 »m | 13,0 | 19,4 |
| >315 »m | 0,6 | 0,9 |

### Beispiel 13

Es wurde ein Emulsionspolymerisat aus 64 Gew.-% α-Methylstyrol, 26 Gew.-% Acrylnitril und 10 Gew.-% Methylmethacrylat eingesetzt.

Der Restwassergehalt des Emulsionspolymerisats betrug nach der Sprühtrocknung 0,5 Gew.-%.

Die Durchführung entsprach Beispiel 10, wobei der Stickstoffstrom 30 Nm³/h, die Temperatur 130°C und der Druck 300 mbar betrugen.

| Restmonomerengehalt (ppm) nach | 0 h | 1 h | 2 h | 3 h | 4 h |
|---|---|---|---|---|---|
| Methylmethacrylat | 1565 | 4 | 1 | <1 | <1 |
| Acrylnitril | 8 | <1 | <1 | <1 | <1 |
| α-Methylstyrol | 2649 | 20 | 8 | <1 | <1 |

Korngrößenverteilung des Pfropfpolymerisats (Gew.-%):

| | vorher | nach 3,5 h |
|---|---|---|
| > 40 »m | 72,7 | 90,5 |
| > 63 »m | 33,2 | 65,1 |
| > 90 »m | 19,8 | 21,6 |
| >125 »m | 3,2 | 3,0 |
| >160 »m | 0,2 | 0,8 |
| >200 »m | - | 0,2 |

## Patentansprüche

1. Verfahren zur Entfernung von flüchtigen Bestandteilen aus Emulsionspolymerisaten, dadurch gekennzeichnet, daß man die Emulsionspolymerisate sprühtrocknet und anschließend die erhaltenen pulverförmigen Emulsionspolymerisate, die weniger als 0,7 Gew.-% Wasser enthalten, bei Normaldruck oder vermindertem Druck und Temperaturen von 30 bis 200°C unter ständiger Durchmischung mit einem Inertgas behandelt.

2. Verfahren nach Anspruch 1, dadurch gekennzeichnet, daß die ständige Durchmischung in einem Wirbelbett erfolgt.

3. Verfahren nach Anspruch 1 oder 2, dadurch gekennzeichnet, daß die Temperatur 5 bis 100°C über der Erweichungstemperatur der Emulsionspolymerisate liegt.

4. Verfahren nach den Ansprüchen 1 bis 3, dadurch gekennzeichnet, daß der Druck 50 bis 800 mbar beträgt.

5. Verfahren nach den Ansprüchen 1 bis 4, dadurch gekennzeichnet, daß das Emulsionspolymerisat zu mindestens 90 Gew.-% aus einem Gemisch von mindestens zwei Monomeren, ausgewählt aus Styrol, linearen oder verzweigten C₁-C₁₂-Alkyl-(meth-)acrylaten, Butadien, Acrylnitril und α-Methylstyrol aufgebaut ist.

## Claims

1. A process for removing volatile constituents from emulsion polymers, which comprises spray-drying the emulsion polymers and subsequently treating the pulverulent emulsion polymers obtained, which contain less than 0.7% by weight of water, with an inert gas at atmospheric or reduced pressure and at from 30 to 200°C with constant mixing.

2. A process as claimed in claim 1, wherein the constant mixing is carried out in a fluidized bed.

3. A process as claimed in claim 1 or 2, wherein the temperature is from 5 to 100°C above the softening point of the emulsion polymers.

4. A process as claimed in claim 1 or 2 or 3, wherein the pressure is from 50 to 800 mbar.

5. A process as claimed in claim 1 or 2 or 3 or 4, wherein the emulsion polymer is built up from at least 90% by weight of a mixture of at least two monomers selected from styrene, linear or branched C₁-C₁₂-alkyl (meth)acrylates, butadiene, acrylonitrile and α-methyl-styrene.

## Revendications

1. Procédé pour éliminer les constituants volatils de polymères en émulsion, caractérisé en ce que l'on sèche les polymères en émulsion par pulvérisation et on traite ensuite les polymères en émulsion pulvérulents obtenus, qui contiennent moins de 0,7% en poids d'eau, à la pression normale ou sous pression réduite et à des températures de 30 à 200°C, par un gaz inerte sous mélange intime permanent.

2. Procédé suivant la revendication 1, caractérisé en ce que le mélange intime permanent s'effectue dans un lit fluidisé ou tourbillonnant.

3. Procédé suivant la revendication 1 ou 2, caractérisé en ce que la température dépasse de 5 à 100°C la température de ramollissement des polymères en émulsion.

4. Procédé suivant l'une quelconque des revendications 1 à 3, caractérisé en ce que la pression varie de 50 à 800 mbars.

5. Procédé suivant l'une quelconque des revendications 1 à 4, caractérisé en ce que le polymère en émulsion est constitué d'au moins 90% en poids d'un mélange d'au moins deux monomères, choisis parmi le styrène, les (méth)acrylates d'alkyle en C₁ à C₁₂, linéaires ou ramifiés, le butadiène, l'acrylonitrile et l'α-méthylstyrène.
